# EUROPÄISCHE PATENTSCHRIFT

(11) **EP 0 997 720 B1**
(45) Veröffentlichungstag und Bekanntmachung des Hinweises auf die Patenterteilung: **24.07.2002**
(21) Anmeldenummer: 99120196.3
(22) Anmeldetag: 09.10.1999
(51) Int. Cl.: G01L 5/28

(54) **Verfahren und Anordnung zur Bremsenprüfung mittels Verzögerungsmessung bei Kraftfahrzeugen**
Method and device for testing the brakes by measuring the deceleration of automotive vehicles
Procédé et dispositif pour tester des freins par mesurer la décéleration des véhicules automobiles

(30) Priorität: 30.10.1998 DE 19850079
(43) Veröffentlichungstag der Anmeldung: 03.05.2000
(73) Patentinhaber: ROBERT BOSCH GMBH, 70442 Stuttgart (DE)
(72) Erfinder: Dannenmann, Artur, 73035 Göppingen (DE); Mai, Hans, 73035 Göppingen (DE); Hoss, Reinhard, 73207 Plochingen (DE)

(56) Entgegenhaltungen:
- DE-A- 3 740 769
- DE-A- 3 939 009
- US-A- 4 520 663

## Beschreibung

### Stand der Technik

Die Erfindung geht aus von einem Verfahren zur Bremsenprüfung mittels Verzögerungsmessung bei Kraftfahrzeugen, bei dem das Fahrzeug aus einer bestimmten Bewegung heraus zum Stillstand abgebremst wird, gemäß der im Oberbegriff von Anspruch 1 und 2 definierten Gattung, sowie von einer Anordnung gemäß dem Oberbegriff von Anspruch 7 und 8.

Zur Prüfung der Bremsen bei Kraftfahrzeugen sind in der Praxis verschiedene Verfahren und Anordnungen bekannt. So gibt es Plattenprüfstände, bei denen das Fahrzeug mit einer bestimmten Geschwindigkeit auf verschiedene Platten gefahren wird und dort zum Stillstand abgebremst wird und über die Reaktion zwischen den Rädern und den Platten auf die Bremskraft der einzelnen Räder geschlossen wird. Allgemein bekannt sind weiterhin Rollenprüfstände, bei denen die einzelnen Achsen des Fahrzeugs auf Rollen gestellt werden, die dann ihrerseits angetrieben und abgebremst werden und dadurch auf die Bremskraft geschlossen wird. Weiterhin ist es allgemein bekannt, bei der Bremsenprüfung Verzögerungsmeßgeräte einzusetzen. Nachteilig ist bei den bekannten Verfahren und Anordnungen zur Bremsenprüfung bei Kraftfahrzeugen, daß üblicherweise eine kostenintensive Mechanik vorgesehen sein muß, und auch bei Rollenprüfständen mit einem erheblichen Energiebedarf zu rechnen ist.

Aus der DE 37 40 769 A ist eine Meßanodnung bekannt, mit der die 5 Bremsverzögerung von Kraftfahrzeugen und die Pedalkraft gemessen und aufgezeichnet wird. Damit soll allgemein die Bremsanlage eines Fahrzeugs überwacht werden und Aussagen über die notwendige Pedalkraft, die damit erzielte Bremsverzögerung insgesamt und den dabei vorhandenen Luftdruck, vermutlich in einer pneumatischen Bremsanlage, gewonnen und aufgezeichnet werden. Eine Abbremsung aus einer bestimmten Bewegung heraus zum Stillstand ist nicht vorgesehen.

Aus der DE 39 39 009 A ist eine Leistungsmeß- und - anzeigevorrichtung für Kraftfahrzeuge bekannt, bei der über Sensoren die Leistung des Motors oder der Bremsen sowie Beschleunigung und Verzögerung des Fahrzeugs gemessen und angezeigt werden können. Gemessen werden Verzögerung, Bremsdruck, Fahrzeuggewicht und die Geschwindigkeit, um die Bremsleistung zu beurteilen. Eine Abbremsung aus einer bestimmten Bewegung heraus zum Stillstand ist nicht vorgesehen.

Aus der US-A-4 520 663 ist für Straßentests von Kraftfahrzeugbremsen vorgesehen, Sensoren für Radgeschwindigkeit, Radtemperatur und Bremsleitungsdruck sowie Fahrzeugverzögerung anzubringen. Ein Gerät verarbeitet die gewonnenen Signale und zeigt in einem Balkendiagramm und numerisch die Wirksamkeit und Grenzwerte der einzelnen Bremsen auf vier zugeordneten Displays an. Damit soll der Testfahrer bei Straßentests auf einfache Weise informiert werden. Eine Abbremsung aus einer bestimmten Bewegung heraus zum Stillstand ist nicht vorgesehen, sondern das Austesten von Bremsen und deren Wirksamkeit bevor sie serienmäßig in Kraftfahrzeuge eingebaut und im Normalbetrieb benutzt werden.

### Vorteile der Erfindung

Das erfindungsgemäße Verfahren zur Bremsenprüfung mittels Verzögerungsmessung bei Kraftfahrzeugen mit den Merkmalen der Ansprüche 1 und 2 hat demgegenüber die Vorteile, eine Bremsenprüfung auf einfache und kostengünstige Weise vornehmen zu können, ohne daß hoher mechanischer Aufwand notwendig ist. In der Regel sind keine besonderen baulichen Maßnahmen erforderlich und die Meßvorrichtung ist mobil. Der Energiebedarf ist minimal.

Bei dem Verfahren gemäß der Erfindung wird dazu prinzipiell beim Prüfvorgang die lineare Verzögerung des Fahrzeuges mittels linearem Beschleunigungsgeber in Richtung der Fahrzeuglängsachse sowie die Querbeschleunigung mittels eines zweiten linearen Beschleunigungsgebers als Funktion der Zeit gemessen und registriert. Aus diesen Werten werden die relevanten, zugehörigen Bremskräfte ermittelt, wobei die Abbremsung als Vollbremsung aus einer bestimmten Geschwindigkeit heraus zum Stillstand und ohne Eingriff am Lenkrad erfolgt und die Beschleunigungsgeber zum Prüfzweck mit dem Fahrzeug verbunden werden.

Durch die in den weiteren Ansprüchen niedergelegten Merkmale sind vorteilhafte Weiterbildungen und Verbesserungen des im Anspruch 1 oder 2 angegebenen Verfahrens möglich.

Entsprechend einer besonders zweckmäßigen und vorteilhaften alternativen Ausgestaltung des Verfahrens nach Anspruch 1 ist gemäß Anspruch 2 für die Querrichtung anstelle des linearen Beschleunigungsgebers ein Drehratensensor vorgesehen.

In weiterer vorteilhafter Ausgestaltung der erfindungsgemäßen Verfahren wird die Bremsprüfung auf normalen Boden- oder Straßenbelag oder einem Belag mit speziell definiertem Reibbeiwert durchgeführt. Damit können einerseits besondere bauliche Maßnahmen vermieden werden und andererseits, fall es notwendig ist, gewisse gesetzliche Vorgaben auf einfache Weise erfüllt werden.

In weiterer vorteilhafter und zweckmäßiger Ausgestaltung der erfindungsgemäßen Verfahren beträgt die bestimmte Bewegung oder Geschwindigkeit, aus der heraus der Abbremsvorgang zum Stillstand erfolgt, etwa 5 km/h.

Entsprechend einer besonders vorteilhaften und zweckmäßigen Weiterbildung der erfindungsgemäßen Verfahren ist vorgesehen, daß mittels eines dritten linearen Beschleunigungsgebers oder eines zweiten Drehratensensors das Einnicken des Fahrzeuges auf die Bremsfläche hin festgestellt und zur Bewertung der Qualität der Radaufhängung, insbesondere der Stoßdämpfer, ausgewertet wird. Dadurch ist auf einfache Weise eine erweiterte Prüfungmöglichkeit gegeben, um beispielsweise einen einfachen Radaufhängungs- und Stoßdämpfertest durchzuführen.

In weiterer Ausgestaltung dieser besonders zweckmäßigen Anwendung der erfindungsgemäß weitergebildeten Verfahren wird bei Schwellen in der Bremsfläche beim Überfahren das Schwingverhalten der Radaufhängung ermittelt. Damit ist ein einfacher Stoßdämpfer-Prüfstand ermöglicht.

Besonders zweckmäßige Anordnungen zur Durchführung der Verfahren nach der Erfindung bzw. seinen entsprechenden Ausgestaltungen bestehen darin, daß zur Ermittlung der linearen Verzögerung des Fahrzeugs ein linearer Beschleunigungsgeber in Richtung der Fahrzeuglängsachse und zur Ermittlung der Querbeschleunigung ein zweiter linearer Beschleunigungsgeber oder alternativ ein Drehratensensor vorgesehen sind, daß diese Beschleunigungsgeber zu Prüfzwecken starr jedoch lösbar mit dem Fahrzeug verbindbar sind, und daß ein Prüfgerät vorgesehen ist, in welchem die Messergebnisse ermittelt werden und mit dem die Beschleunigungsgeber verbunden sind.

Entsprechend vorteilhafter Ausgestaltung dieser Anordnungen sind der Beschleunigungsgeber und/oder der oder die Drehratensensoren am Armaturenbrett oder an der Aufhängevorrichtung für die Seitentüren im Inneren des Fahrzeugs oder mittels Magnetstreifen auf dem Dach oder der Motorhaube befestigbar.

In besonders vorteilhafter Ausgestaltung der Anordnungen gemäß der Erfindung ist vorgesehen, daß die Beschleunigungsgeber und/oder der oder die Drehratensensoren mit dem Prüfgerät eine Einheit bilden. Dadurch ist die Anbringung besonders vereinfacht und die Handhabung bei der Prüfung besonders kostensparend gestaltet. Die Mobilität des Prüfgeräts wird damit besonders erhöht.

In weiterer Ausgestaltung dieser Anordnungen gemäß der Erfindung ist vorgesehen, daß das Prüfgerät eine eigene Energieversorgung aufweist oder an das Bordnetz des zu prüfenden Fahrzeuges anschließbar ist.

In weiterer Ausgestaltung dieser Anordnungen gemäß der Erfindung ist vorgesehen, daß das Prüfgerät im Inneren des Fahrzeugs, insbesondere am Armaturenbrett oder an der Aufhängevorrichtung für die Seitentüren zu dem Prüfzweck starr befestigbar ist. Dadurch ist beim Prüfen entsprechend dieser Ausgestaltung eine vorteilhafte Anwendung durch einfaches Anbringen gegeben. Ebenso läßt sich das Prüfgerät nach der Prüfung auf einfache Weise wieder abzunehmen.

In besonders zweckmäßiger Weiterbildung der erfindungsgemäßen Anordnungen enthält das Prüfgerät einen Rechner für die Meßwertverarbeitung und/oder eine Anzeige und/oder einen eigenen Drucker oder einen Anschluß für einen externen Drucker. Damit sind in vorteilhafter Weise alle wesentlichen für den Prüfzweck notwendigen Bauelemente in einem einzigen Gerät vereint. Die Erfindung wird nachfolgend anhand zweier Ausführungsbeispiele näher erläutert.

### Beschreibung der Ausführungsbeispiele

Beim erfindungsgemäßen Verfahren wird mittels eines linearen Beschleunigungsgebers die lineare Verzögerung des Fahrzeugs in Richtung der Fahrzeuglängsachse festgestellt sowie mittels eines zweiten linearen Beschleunigungsgebers die Querbeschleunigung festgestellt. Beides wird als Funktion der Zeit gemessen und registiert. Daraus werden die relevanten, zugehörigen Bremskräfte ermittelt. Beim Prüfvorgang erfolgt die Abbremsung als Vollbremsung aus einer bestimmten Geschwindigkeit heraus zum Stillstand und ohne daß am Lenkrad für eine Lenkbewegung eingegriffen wird. Zum Prüfzweck sind die Beschleunigungsgeber mit dem Fahrzeug starr verbunden und fest mit ihm gekoppelt.

Anstelle des linearen Beschleunigungsgebers für die Querrichtung kann auch ein Drehratensensor vorgesehen sein, der die Gierbewegung in Querrichtung feststellt. Drehratensensoren sind Bauelemente der Anmelderin, die bei der Fahrdynamik-Regelung entwickelt und eingesetzt worden sind. Sie sind besonders einfache und zuverlässige Meßwertgeber für Giermomente.

Die Meßvorrichtung bzw. das Prüfgerät besteht also aus zumindest dem linearen Beschleunigungssensor, der die Verzögerung in Richtung der Fahrzeuglängsachse feststellt, und dem Beschleunigungsgeber für die Querrichtung, einem Rechner für die Meßwertverarbeitung und einer Anzeige. Es kann ein eingebauter Drucker vorgesehen sein oder eine Anschlußmöglichkeit für einen externen Drucker. Weiterhin ist es zweckmäßig, die Energieversorgung des Prüfgeräts entweder durch eigene Versorgung mittels Batterie oder über das Bordnetz des zu prüfenden Fahrzeuges sicherzustellen. Vorteilhafter Weise sind alle Komponenten in einem einzigen Gehäuse untergebracht.

Dieses mobile Prüfgerät wird vom Prüfer im Fahrzeuginneren befestigt, beispielsweise am Armaturenbrett oder an der Aufhängevorrichtung für die Seitentüren. Möglich ist es auch, falls die Beschleunigungsgeber separat sind oder das Prüfgerät relativ klein gestaltet ist, beides mit Magnetstreifen auf der Außenseite des Fahrzeuges, etwa auf dem Dach des Fahrzeuges oder der Motorhaube, zu befestigen. Wesentlich ist in jedem Falle, daß beim Prüfvorgang die Sensoren starr mit dem Fahrzeug gekoppelt sind.

Die Bremsenprüfung des Fahrzeuges erfolgt auf einer ebenen Unterlage, in vorteilhafter Weise beispielsweise auf dem Werkstattboden oder der Straße. Werden jedoch beispielsweise aufgrund gesetzlicher Anforderungen gewisse bestimmte Reibbeiwerte für die Bremsfläche gefordert, dann kann ein besonders definierter Bodenbelag, beispielsweise eine besondere Teerauflage oder eine Stahlplatte vorgesehen sein. Die Abbremsung erfolgt von einer bestimmten Geschwindigkeit von ca. 5 km/h durch eine Vollbremsung zum Stillstand. Die vorgesehenen Sensoren messen die dabei auftretende Verzögerung und das Prüfgerät wertet sie aus. Die gemessenen Verzögerungswerte sind ein Maß für die Größe und die Richtung der einzelnen Bremskräfte und somit ein geeignetes Mittel zum Testen der Funktionstüchtigkeit der Bremsen.

Im einfachsten Fall wird die lineare Verzögerung in Richtung der Fahrzeuglängsachse und die Querbeschleunigung, die bei ungleichmäßigen Bremsen zu einem Giermoment führt, als Funktion der Zeit gemessen. Dazu sind zwei lineare Beschleunigungsgeber für beide Richtungen oder ein linearer Beschleunigungsgeber für die Längsrichtung und ein Drehratensensor für das Giermoment vorgesehen.

Gemäß einem weiteren Ausführungsbeispiel der Erfindung kann das erfindungsgemäße Verfahren und die erfindungsgemäße Anordnung dahingehend erweitert werden, daß auch die Funktion der Radaufhängung überprüft werden kann, um damit beispielsweise einen Stoßdämpfertest durchzuführen. Dazu wird ein dritter Beschleunigungssensor, der das Einnicken des Fahrzeuges in Richtung auf die Bremsfläche hin überprüft, vorgesehen. Dieser dritte Beschleunigungssensor kann ein linearer Sensor für die dritte Raumachse sein oder ein zusätzlicher Drehratensensor für Drehbeschleunigung bzw. -kräfte in Richtung auf die Bremsfläche hin.

Gemäß einer besonders vorteilhaften Erweiterung dieses Ausführungsbeispieles kann diese Testvorrichtung zu einem einfachen Stoßdämpfer-Prüfstand dadurch ausgestaltet und erweitert werden, daß man Schwellen in den Boden, der beim Abbremsvorgang überfahren wird, einbaut. Beim Überfahren wird dann das Schwingverhalten der Radaufhängung und die Qualität der Stoßdämpfer mittels des zusätzlichen Drehratensensors noch präziser untersucht. Somit ist auf einfache Weise ohne großen Aufwand ein einfacher Stoßdämpfer-Prüfstand zur Verfügung gestellt.

Durch die erfindungsgemäßen Verfahren und die erfindungsgemäßen Anordnungen zur Durchführung derselben ergeben sich erhebliche Kostenvorteile, da auf herkömmliche kostenintensive Mechanik verzichtet werden kann. Es sind in der Regel keine baulichen Maßnahmen, beispielsweise für eine Werkstattgrube, erforderlich. Falls es zugelassen ist, kann auch auf der normalen Straße und dem entsprechenden Belag geprüft werden. Die Meßvorrichtung ist mobil, insbesondere dann, wenn alles in einem einzigen Prüfgerät zusammengebaut ist. Im Vergleich zu Rollenprüfständen ist der Energiebedarf minimal. Insgesamt betrachtet ist somit durch die Erfindung eine einfache und kostengünstige Bremsenprüfung zur Verfügung gestellt, die weiterhin zur Prüfung der Radaufhängung einfach zu erweitern ist.

## Patentansprüche

1. Verfahren zur Bremsenprüfung mittels Verzögerungsmessung bei Kraftfahrzeugen, bei dem das Fahrzeug aus einer bestimmten Bewegung heraus zum Stillstand abgebremst wird,
**dadurch gekennzeichnet, daß** beim Prüfvorgang die lineare Verzögerung des Fahrzeuges mittels linearem Beschleunigungsgeber in Richtung der Fahrzeuglängsachse sowie die Querbeschleunigung mittels eines zweiten linearen Beschleunigungsgeber als Funktion der Zeit gemessen und registriert wird, und daraus die relevanten, zugehörigen Bremskräfte ermittelt werden, wobei die Abbremsung als Vollbremsung aus einer bestimmten Geschwindigkeit heraus zum Stillstand und ohne Eingriff am Lenkrad erfolgt und die Beschleunigungsgeber zum Prüfzweck mit dem Fahrzeug starr verbunden werden.

2. Verfahren zur Bremsenprüfung mittels Verzögerungsmessung bei Kraftfahrzeugen, bei dem das Fahrzeug aus einer bestimmten Bewegung heraus zum Stillstand abgebremst wird,
**dadurch gekennzeichnet, daß** beim Prüfvorgang die lineare Verzögerung des Fahrzeuges mittels linearem Beschleunigungsgeber in Richtung der Fahrzeuglängsachse sowie die Querbeschleunigung mittels eines Drehratensensors als Funktion der Zeit gemessen und registriert wird, und daraus die relevanten, zugehörigen Bremskräfte ermittelt werden, wobei die Abbremsung als Vollbremsung aus einer bestimmten Geschwindigkeit heraus zum Stillstand und ohne Eingriff am Lenkrad erfolgt und die Beschleunigungsgeber zum Prüfzweck mit dem Fahrzeug starr verbunden werden.

3. Verfahren nach Anspruch 1 oder 2, **dadurch gekennzeichnet, daß** die Bremsprüfung auf normalem Boden- oder Straßenbelag oder einem Belag mit speziell definiertem Reibbeiwert durchgeführt wird.

4. Verfahren nach einem der Ansprüche 1 bis 3, **dadurch gekennzeichnet, daß** die bestimmte Bewegung oder Geschwindigkeit, aus der heraus der Abbremsvorgang zum Stillstand erfolgt, etwa 5 km/h beträgt.

5. Verfahren nach Anspruch 1, 2 oder 3, **dadurch gekennzeichnet, daß** mittels eines dritten linearen Beschleunigungsgebers oder eines zweiten Drehratensensors das Einnicken des Fahrzeuges auf die Bremsauflage hin festgestellt und zur Bewertung der Qualität der Radaufhängung, insbesondere der Stoßdämpfer ausgewertet wird.

6. Verfahren nach Anspruch 5, **dadurch gekennzeichnet, daß** bei Schwellen in der Bremsfläche beim Überfahren das Schwingverhalten der Radaufhängung ermittelt wird.

7. Anordnung zum Durchführen des Verfahrens nach Anspruch 1, 5 oder 6, **dadurch gekennzeichnet, daß** zur Ermittlung der linearen Verzögerung des Fahrzeugs ein linearer Beschleunigungsgeber in Richtung der Fahrzeuglängsachse und zur Ermittlung der Querbeschleunigung ein zweiter linearer Beschleunigungsgeber vorgesehen sind, daß diese Beschleunigungsgeber zu Prüfzwecken starr jedoch lösbar mit dem Fahrzeug verbindbar sind, und daß ein Prüfgerät vorgesehen ist, in welchem die Messergebnisse ermittelt werden und mit dem die Beschleunigungsgeber verbunden sind.

8. Anordnung zum Durchführen des Verfahrens nach Anspruch 2, 5 oder 6, **dadurch gekennzeichnet, daß** zur Ermittlung der linearen Verzögerung des Fahrzeugs ein linearer Beschleunigungsgeber in Richtung der Fahrzeuglängsachse und zur Ermittlung der Querbeschleunigung ein Drehratensensor vorgesehen sind, daß der Beschleunigungsgeber und der Drehratensensor zu Prüfzwecken starr jedoch lösbar mit dem Fahrzeug verbindbar sind, und daß ein Prüfgerät vorgesehen ist, in welchem die Messergebnisse ermittelt werden und mit dem der Beschleunigungsgeber und der Drehratensensor verbunden sind.

9. Anordnung nach Anspruch 7 oder 8, **dadurch gekennzeichnet, daß** der Beschleunigungsgeber und/oder der oder die Drehratensensoren am Armaturenbrett oder an der Aufhängevorrichtung für die Seitentüren im Inneren des Fahrzeugs oder mittels Magnetstreifen auf dem Dach oder der Motorhaube befestigbar sind.

10. Anordnung nach Anspruch 7 oder 8, **dadurch gekennzeichnet, daß** die Beschleunigungsgeber und/oder der oder die Drehratensensoren mit dem Prüfgerät eine Einheit bilden.

11. Anordnung nach Anspruch 7 bis 10, **dadurch gekennzeichnet, daß** das Prüfgerät eine eigene Energieversorgung aufweist oder an das Bordnetz des zu prüfenden Fahrzeuges anschließbar ist.

12. Anordnung Anspruch 10 oder 11, **dadurch gekennzeichnet, daß** das Prüfgerät im Inneren des Fahrzeugs, insbesondere am Armaturenbrett oder an der Aufhängevorrichtung für die Seitentüren, zu dem Prüfzweck starr befestigbar ist.

13. Anordnung nach Anspruch 7 bis 12, **dadurch gekennzeichnet, daß** das Prüfgerät einen Rechner für die Meßwertverarbeitung und/oder eine Anzeige und/oder einen eigenen Drucker oder einen Anschluß für einen externen Drucker enthält.

## Claims

1. Method for testing brakes by measuring the deceleration of motor vehicles, in which the vehicle is braked out of a specific movement to a standstill, **characterized in that** during the testing procedure the linear deceleration of the vehicle is measured and registered in the direction of the longitudinal axis of the vehicle by means of a linear acceleration sensor, and the transverse acceleration is measured and registered as a function of time by means of a second linear acceleration sensor, and the relevant, associated braking forces are determined therefrom, the braking taking place as full application of the brakes from a specific speed to a standstill and without intervention at the steering wheel, and the acceleration sensors being rigidly connected to the vehicle for testing purposes.

2. Method for testing brakes by measuring the deceleration of motor vehicles, in which the vehicle is braked out of a specific movement to a standstill, **characterized in that** during the testing procedure the linear deceleration of the vehicle is measured and registered in the direction of the longitudinal axis of the vehicle by means of a linear acceleration sensor, and the transverse acceleration is measured and registered as a function of time by means of a rotational speed sensor, and the relevant, associated braking forces are determined therefrom, the braking taking place as full application of the brakes from a specific speed to a standstill and without intervention of the steering wheel, and the acceleration sensors being rigidly connected to the vehicle for testing purposes.

3. Method according to Claim 1 or 2, **characterized in that** the testing of brakes is carried out on a normal ground covering or road covering or a covering with a specially defined coefficient of friction.

4. Method according to one of Claims 1 to 3, **characterized in that** the specific movement or speed from which the braking process to a standstill takes place is approximately 5 km/h.

5. Method according to Claim 1, 2 or 3, **characterized in that** the pitching of the motor vehicle in response to the application of the brakes is detected by means of a third linear acceleration sensor or a second rotational speed sensor and is evaluated in order to assess the quality of the wheel suspension, in particular the shock absorbers.

6. Method according to Claim 5, **characterized in that** the oscillatory behaviour of the wheel suspension is determined when driving over sleepers in the surface on which braking is performed.

7. Arrangement for carrying out the method according to Claim 1, 5 or 6, **characterized in that** a linear acceleration sensor is provided in the direction of the longitudinal axis of the vehicle for determining the linear deceleration of the vehicle and a second linear acceleration sensor is provided for determining the transverse acceleration, **in that** these acceleration sensors can be connected rigidly yet releasably to the vehicle for testing purposes, and **in that** a test device is provided in which the measurement results are determined and to which the acceleration sensors are connected.

8. Arrangement for carrying out the method according to Claim 2, 5 or 6, **characterized in that** a linear acceleration sensor is provided in the direction of the longitudinal axis of the vehicle for determining the linear deceleration of the vehicle, and a rotational speed sensor is provided for determining the transverse acceleration, **in that** the acceleration sensor and the rotational speed sensor can be connected rigidly yet releasably to the vehicle for testing purposes, and **in that** a test device is provided in which the measurement results are determined and to which the acceleration sensor and the rotational speed sensor are connected.

9. Arrangement according to Claim 7 or 8, **characterized in that** the acceleration sensor and/or the rotational speed sensor or sensors can be attached to the dashboard or to the suspension device for the side doors in the interior of the vehicle or to the roof or to the engine bonnet by means of magnetic strips.

10. Arrangement according to Claim 7 or 8, **characterized in that** the acceleration sensors and/or the rotational speed sensor or sensors form one unit with the test device.

11. Arrangement according to Claims 7 to 10, **characterized in that** the test device has its own power supply or can be connected to the electrical system of the vehicle to be tested.

12. Arrangement according to Claim 10 or 11, **characterized in that** the test device can be rigidly attached to the interior of the vehicle, in particular to the dashboard or to the suspension device for the side doors, for testing purposes.

13. Arrangement according to Claims 7 to 12, **characterized in that** the test device contains a computer for processing measured values and/or a display and/or a separate printer or a connection for an external printer.

## Revendications

1. Procédé de contrôle des freins à l'aide d'une mesure de décélération d'un véhicule automobile, selon lequel on freine le véhicule à partir d'un certain mouvement jusqu'à l'arrêt,
**caractérisé en ce que**
au cours de l'opération de contrôle, on mesure la décélération linéaire du véhicule à l'aide d'un capteur d'accélération linéaire dans la direction de l'axe longitudinal du véhicule et l'accélération transversale à l'aide d'un second capteur d'accélération linéaire en fonction du temps et on enregistre les valeurs, et à partir de ces valeurs, on détermine les forces de freinage correspondantes caractéristiques, le freinage étant un freinage total à partir d'une certaine vitesse jusqu'à l'arrêt et sans action sur le volant, et les capteurs d'accélération étant reliés rigidement au véhicule pour effectuer l'essai.

2. Procédé de contrôle des freins par mesure de la décélération d'un véhicule automobile selon lequel on freine le véhicule à partir d'un certain mouvement jusqu'à l'arrêt,
**caractérisé en ce que**
pour le contrôle, on mesure et on enregistre la décélération linéaire du véhicule à l'aide d'un capteur d'accélération linéaire dans la direction de l'axe longitudinal du véhicule ainsi que l'accélération transversale par un capteur de degré de rotation en fonction du temps et on en déduit la force de freinage caractéristique correspondante, le freinage se faisant comme freinage total à partir d'une certaine vitesse jusqu'à arrêt et sans action sur le volant et les capteurs d'accélération étant fixés rigidement au véhicule pour effectuer le contrôle.

3. Procédé de contrôle des freins selon les revendications 1 ou 2,
**caractérisé en ce que**
le contrôle de freinage se fait sur un revêtement de sol ou de chaussée normal ou sur un revêtement avec un coefficient d'adhérence défini de manière spéciale.

4. Procédé de contrôle des freins selon l'une des revendications 1 à 3,
**caractérisé en ce que**
le mouvement ou la vitesse déterminés à partir de laquelle on freine jusqu'à l'arrêt est une vitesse de l'ordre de 5 km/h.

5. Procédé de contrôle des freins selon l'une des revendications 1, 2 ou 3,
**caractérisé en ce qu'**
à l'aide d'un troisième capteur d'accélération linéaire ou d'un second capteur de degré de rotation, on détermine le piquage du véhicule par rapport à l'appui de freinage et on évalue la qualité de la suspension des roues, notamment des amortisseurs.

6. Procédé de contrôle des freins selon la revendication 5,
**caractérisé en ce que**
pour des seuils dans la surface de freinage, lors du passage des seuils, on détermine le comportement oscillant de la suspension des roues.

7. Dispositif pour la mise en oeuvre du procédé selon les revendications 1 et 5 ou 6,
**caractérisé en ce que**
pour déterminer la décélération linéaire du véhicule, on a un capteur d'accélération linéaire dans la direction de l'axe longitudinal du véhicule et pour déterminer l'accélération transversale, on a un second capteur d'accélération linéaire, ces capteurs d'accélération étant fixés de manière rigide et néanmoins amovible au véhicule pour effectuer l'essai, avec un appareil de contrôle auquel sont reliés les capteurs d'accélération et qui détermine les résultats des mesures.

8. Dispositif pour la mise en oeuvre du procédé selon les revendications 2, 5 ou 6,
**caractérisé en ce que**
pour déterminer la décélération linéaire du véhicule, on a un capteur d'accélération linéaire dans la direction de l'axe longitudinal du véhicule et pour déterminer l'accélération transversale, on a un capteur de degré de rotation, le capteur d'accélération et le capteur de degré de rotation sont reliés de manière rigide et néanmoins amovible au véhicule pour effectuer les essais, et
un appareil de contrôle détermine les résultats des mesures en étant relié au capteur d'accélération et au capteur de degré de rotation.

9. Dispositif pour la mise en oeuvre du procédé selon les revendications 7 ou 8,
**caractérisé en ce que**
le capteur d'accélération et/ou le ou les capteurs de degré de rotation se fixent au tableau de bord ou sur un dispositif de suspension des portes latérales, à l'intérieur du véhicule ou à l'aide de ruban magnétique sur le toit ou le capot.

10. Dispositif pour la mise en oeuvre du procédé selon les revendications 7 ou 8,
**caractérisé en ce que**
les capteurs d'accélération et/ou le ou les capteurs de degré de rotation constituent un ensemble avec l'appareil de contrôle.

11. Dispositif pour la mise en oeuvre du procédé selon les revendications 7 à 10,
**caractérisé en ce que**
l'appareil de contrôle comporte sa propre alimentation en énergie ou peut être branché sur le réseau embarqué du véhicule à contrôler.

12. Dispositif pour la mise en oeuvre du procédé selon les revendications 10 ou 11,
**caractérisé en ce que**
l'appareil de contrôle se fixe rigidement pour le contrôle à l'intérieur du véhicule, notamment au tableau de bord ou au dispositif de suspension des portes latérales.

13. Dispositif pour la mise en oeuvre du procédé selon les revendications 7 à 12,
**caractérisé en ce que**
l'appareil de contrôle comporte un calculateur pour traiter les valeurs de mesure et/ou un afficheur et/ou une imprimante propre ou un branchement pour une imprimante externe.
